# EUROPEAN PATENT APPLICATION

(11) **EP 1 157 874 A2**
(43) Date of publication of application: **28.11.2001**
(21) Application number: 01111076.4
(22) Date of filing: 08.05.2001
(51) Int. Cl.: B60K 41/14, F16H 61/00

(54) **Method and apparatus for a control system of an automatic transmission**

(30) Priority: 23.05.2000 JP 2000151884
(71) Applicant: TOYOTA JIDOSHA KABUSHIKI KAISHA, Aichi-ken 471-8571 (JP)
(72) Inventor: Taniguchi, Hiroji, Toyota-shi, Aichi-ken 471-8571 (JP); Kono, Katsumi, Toyota-shi, Aichi-ken 471-8571 (JP); Matsuo, Kenji, Toyota-shi, Aichi-ken 471-8571 (JP); Yasue, Hideki, Toyota-shi, Aichi-ken 471-8571 (JP); Tamura, Tadashi, Toyota-shi, Aichi-ken 471-8571 (JP); Inoue, Daisuke, Toyota-shi, Aichi-ken 471-8571 (JP); Inoue, Takashi, Toyota-shi, Aichi-ken 471-8571 (JP); Kondo, Hiroki, Toyota-shi, Aichi-ken 471-8571 (JP); Hattori, Yuji, Toyota-shi, Aichi-ken 471-8571 (JP)
(74) Representative: Leson, Thomas Johannes Alois, Dipl.-Ing.

(57) **Abstract**

A method and apparatus control an automatic transmission (3). A controller prohibits (S14) a down-shift of the automatic transmission (3) when the input rotation speed of the automatic transmission (3) is determined to be equal to or greater than a predetermined value due to operating characteristics of a device or a plurality of devices installed in a vehicle equipped with the automatic transmission (3) and an engine (2). Since the down-shift of the automatic transmission (3) is prohibited (S14), when the input rotation speed is determined to be equal to or greater than the predetermined value, the input rotation speed of the automatic transmission (3) is prevented from being further increased. Consequently, overrun of the engine (2) is effectively avoided.

## Description

### BACKGROUND OF THE INVENTION

### 1. Field of Invention

The present invention relates to a method and apparatus for a control system of an automatic transmission which is controlled based on an accelerator angle and a vehicle speed. The present invention also relates to a control method of the control apparatus.

### 2. Description of Related Art

Up to the present, an automatic transmission in which a speed ratio is automatically controlled based on an accelerator angle and a vehicle speed has been known. According to this automatic transmission, it is not necessary for a person who drives a vehicle equipped with the automatic transmission to select a speed change shift by operating a shift lever or the like.

It is also known that a continuously variable transmission (hereinafter, referred to as "CVT" in an abbreviated form) belongs to the automatic transmission, and a speed ratio of the CVT can be changed continuously. By using the CVT, a driver can always select the most suitable speed ratio automatically.

Here, a relationship between a rotation speed of a power source which is connected to an input side of the automatic transmission and a rotation speed of an output side of the automatic transmission is uniquely determined. Here, the above-mentioned rotation speed indicates revolutions per minute. Accordingly, if an unsuitable speed ratio is set in the automatic transmission such as the CVT or the like, the rotation speed of the power source responding to the vehicle speed is determined to be unexpectedly excessive.

For example, the following details are described in Japanese Laid-Open Patent Application No. 6-42627. In this application, it is shown that a down-shift of a CVT is prohibited, when a rotation speed of an input shaft of the CVT is higher than an allowable maximum rotation speed of an engine caused by the down-shift due to the manual operation at high speed running of a vehicle. Here, the CVT has a manual mode by which a driver can manually set a speed change shift. By this invention, the rotation speed of the engine which is connected to the input side of the CVT can be prevented from overrunning, even when the driver operates the speed change shift by mistake.

In the above-mentioned example, however, only prohibiting the overrun of the engine caused by the manual operation of the driver is targeted, and a countermeasure responding to variable conditions and circumstances are not considered.

### SUMMARY OF THE INVENTION

It is thus one object of the present invention to solve the aforementioned problems. An object of the invention is to provide a control system for an automatic transmission, and a control method of the control system. The control system can execute a suitable countermeasure to the automatic transmission so that the engine does not overrun, even when various conditions and circumstances change.

A control apparatus for an automatic transmission is installed in a vehicle. The automatic transmission is controlled on the basis of an accelerator angle and a speed of the vehicle. When an input rotation speed of the automatic transmission is equal to or greater than a predetermined value due to operating characteristics of a device or a plurality of devices installed in the vehicle, a down-shift of the automatic transmission is prohibited. As mentioned above, by prohibiting the down-shift of the automatic transmission when the input rotation speed of the automatic transmission is equal to or greater than a predetermined value, the input rotation speed of the automatic transmission can be prevented from further increasing, and the engine can be effectively prevented from overrunning.

### BRIEF DESCRIPTION OF THE DRAWINGS

The above mentioned embodiment and other embodiments, objects, features, advantages, technical and industrial significance of this invention will be better understood by reading the following detailed description of the preferred embodiments of the invention, when considered in connection with the accompanying drawings, in which:
Fig. 1 is a schematic view showing a power train structure of a vehicle to which a control apparatus of this invention is applied;
Fig. 2 shows a schematic view of an entire structure of a transmission including a CVT;
Fig. 3 shows a structure of a fluid pressure control circuit;
Fig. 4 is a flow chart showing a first embodiment of the control action of a control device;
Fig. 5 is a graph showing a control range and an upper limit input rotation speed;
Fig. 6 is a flow chart showing a second embodiment control action of the control device partially modified from the control action shown in Fig. 4; and
Fig. 7 is a block diagram showing a control of the control device.

### DETAILED DESCRIPTION OF PREFERRED EMBODIMENTS

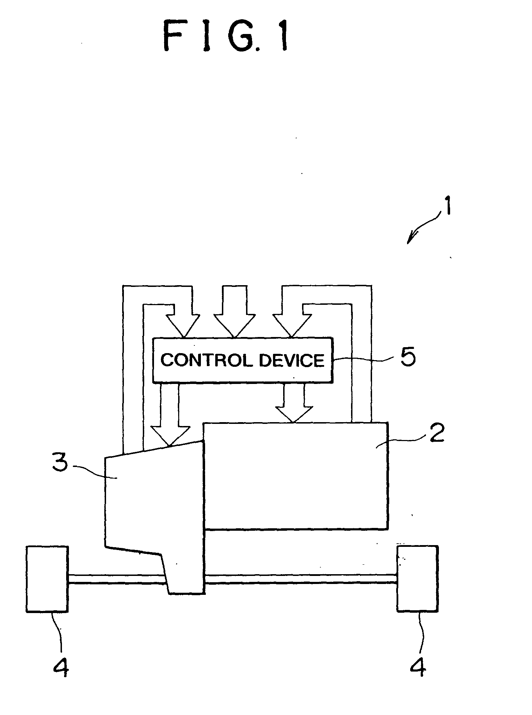

In the following description and the accompanying drawings, the present invention will be described in more detail in terms of preferred embodiments. First, a transmission 3 including a CVT 14 will be explained. Fig. 1 is a schematic view showing a power train structure to which the embodiment of the present invention is applied. As a power source, here, an internal combustion engine 2 (hereinafter, referred to simply as "engine") is defined. An output power of the engine 2 transmitted to wheels 4 by way of the transmission 3 drives a vehicle equipped with a power train 1 including the transmission 3. A control device 5 for controlling the power train 1 calculates control parameters for the engine 2 and the transmission 3 from parameters which indicate a driving condition of the vehicle such as an operating condition of the engine 2, an operating condition of the transmission 3, and the like. The control parameters are, for example, a throttle valve angle, a fuel injection amount of the engine 2, a speed ratio of the transmission 3, and the like. By controlling these parameters, the engine 2 and the transmission 3 are controlled in a predetermined condition.

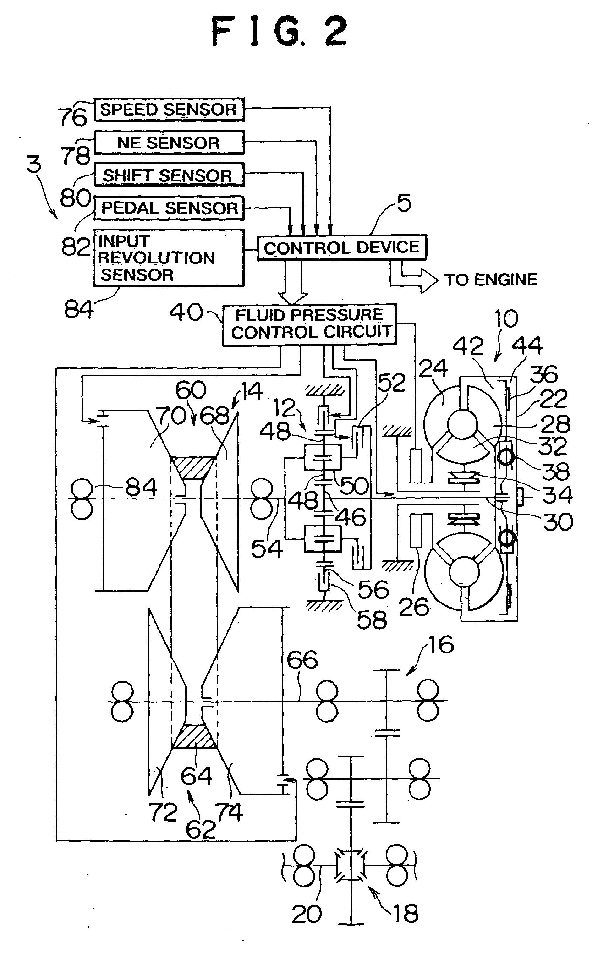

Fig. 2 is a schematic structure view of the transmission 3 including the CVT 14. (Automobile engineers sometimes refer to "continuously variable transmission (CVT)" as an entire transmission, when the transmission includes the CVT.) The output power of the engine 2 (not shown in Fig. 2), from the right side in Fig. 2, is transmitted to a torque converter 10 (which transmits torque by fluid). The power is then transmitted to a drive shaft 20 by way of a forward-reverse change mechanism 12, the CVT 14, a reduction mechanism 16, and a differential 18. The power of the drive shaft 20 transmitted to the wheels 4 (as shown in Fig. 1) drives the vehicle.

A front cover 22 included in the torque converter 10 is rotated by the power of the engine 2. The rotation power of the front cover 22 is transmitted to a pump impeller 24 and an oil pump 26. The oil pump 26 supplies pressure fluid to each pressure fluid control device of the transmission 3. Furthermore, the pressure fluid also functions as lubrication oil. The pump impeller 24 pushes out pressure fluid contained in the torque converter 10 to a turbine runner 28, so that the pressure fluid rotates the turbine runner 28. The turbine runner 28 is coupled to an output shaft 30 of the torque converter 10, so that the turbine runner 28 rotates together with the output shaft 30 as one body. The rotation power of the turbine runner 28 is consequently an output rotation power of the torque converter 10. The pressure fluid flowing through the turbine runner 28 passes through a stator 32 and is sent to the pump impeller 24. The stator 32 is supported and fixed by a case of the transmission 3 by way of a one-way clutch 34. When a speed ratio (that is, a ratio of an input rotation speed against an output rotation speed) of the torque converter 10 is in a low range (that is, equal to or less than a clutch point), the one-way clutch 34 is engaged, and the stator 32 is fixed. In this case, the stator 32 changes a flowing direction of the pressure fluid pushed out from the turbine runner 28. Furthermore, the stator 32 pushes out the pressure fluid to the pump impeller 24 from the rear of the pump impeller 24, from the viewpoint of the rotating direction of the pump impeller 24. By this action, torque of the turbine impeller 28 is amplified against the torque of the pump impeller 24. On the other hand, when the speed ratio of the torque converter 10 is over the clutch point, the pressure fluid pushed out from the turbine runner 28 flows and strikes against back members of the stator 32. The one-way clutch 34 is, then, released, and the stator 32 rotates idly. In this case, torque of the torque converter 10 is not amplified, and the torque converter 10 functions as a fluid coupling.

Furthermore, the torque converter 10 functions as a direct clutch. A direct clutch plate 36 is disposed such that the direct clutch plate 36 fronts to the front cover 22. The direct clutch plate 36 is supported by the output shaft 30 of the torque converter 10 so that the direct clutch plate 36 rotates together with the output shaft 30 as one body and can slide in the direction of the axis of the output shaft 30. A torsional damper 38 for absorbing a torsional shock or vibration is disposed between an outer circumference and a center portion of the direct clutch plate 36. The outer circumference contacts the front cover 22, and the center portion is supported by the output shaft 30. When the direct clutch plate 36 is engaged, the pressure fluid from a fluid pressure control circuit 40 controlled by the control device 5 is supplied to a backside chamber 42 of the direct clutch plate 36. By the pressure of the pressure fluid, the direct clutch plate 36 is slid to the right in Fig. 2 and is engaged to the front cover 22. The power is, thus, transmitted not hydraulically but mechanically. In order to release the direct clutch condition, the pressure fluid is supplied to a front chamber 44 of the direct clutch plate 36. By the pressure of the fluid, the direct clutch plate 36 is slid to the left in Fig. 2. Accordingly, the direct clutch plate 36 is detached from the front cover 22.

The forward-reverse change mechanism 12 is a double-pinion type planetary gear mechanism including sets of double-pinions. A sun gear 46 is coupled to the output shaft 30 of the torque converter 10. Double pinions 48 are supported by a carrier 50 so that the double pinions 48 rotate while moving along the outer circumference of the sun gear 46. The carrier 50 is connected to the output shaft 30 of the torque converter 10 via a forward clutch 52. Furthermore, the carrier 50 is coupled to an input shaft 54 of the CVT 14 (hereinafter, referred to as "CVT input shaft 54"). A ring gear 56 is fixed to a case of the transmission 3 by engaging a reverse brake 58.

When the vehicle runs forward, the forward clutch 52 is engaged by supplying the pressure fluid from the fluid pressure control circuit 40, and the CVT input shaft 54 is directly connected to the output shaft 30 of the torque converter 10. When the vehicle runs back, on the one hand the forward clutch 52 is released, and on the other hand the reverse brake 58 is engaged by supplying the pressure fluid from the fluid pressure control circuit 40. The ring gear 56 then stops, and the carrier 50 rotates in the opposite direction against the output shaft 30 of the torque converter 10. That is, the both rotation directions of the front and rear sides of the forward-reverse change mechanism 12 are opposite. Incidentally, the transmission 3 is neutral when the forward clutch 52 and reverse brake 58 are released.

The CVT 14 comprises a primary pulley 60 rotating together with the CVT input shaft 54, a secondary pulley 62, and a belt 64 partially wrapping the primary pulley 60 and the secondary pulley 62. The secondary pulley 62 rotates a CVT output shaft 66 and sends the rotation power to the reduction 16.

The primary pulley 60 has a fixed sheave 68 and a movable sheave 70. These sheaves 68 and 70 are disposed in parallel in the axis direction of the CVT input shaft 54, and each face of both sheaves fronting to each other is shaped as a side face of a substantial cone or a substantially truncated cone. On the one side, the movable sheave 70 rotates together with the CVT input shaft 54 as one body. On the other side, the movable sheave 70 itself functions as a hydraulic actuator and moves in the axis direction of the movable sheave 70 by controlling a volume of the pressure fluid from the fluid pressure control circuit 40. The movement of the movable sheave 70 changes a distance between the two confronting faces of both sheaves 68 and 70.

In the same way, the secondary pulley 62 includes a fixed sheave 72 and a movable sheave 74, each having a shape of a side face of a substantial cone or a substantially truncated cone. The movable sheave 74 moves in the axis direction thereof by controlling a volume of the supplied pressure fluid. A distance between the both sheaves 72 and 74 is thus changed.

A section of the belt 64 is shaped like a substantial trapezoid. In the sectional view as shown in Fig. 2, each side of the belt 64 contacts each confronting face of both sheaves 68 and 70. In the same manner, each side of the belt 64 contacts each confronting face of the both sheaves 72 and 74. The belt 64 is put between the fixed sheave 68 and the movable sheave 70, and the belt 64 is also put between the fixed sheave 72 and the movable sheave 74 in the other portion of the belt 64. In accordance with a change of the distance between the fixed sheave 68 and the movable sheave 70, a radius is changed. Here, the radius is a distance between the common axis of the both sheaves and a center point of a line which the belt 64 and the fixed sheave 68 contact or the belt 64 and the movable sheave 70 contact. In the same way, the above-mentioned characteristic is applied to the second pulley 62, that is, to the fixed sheave 72 and the movable sheave 74. Moreover, since the above-mentioned radius is changed in each of the input side (that is, the primary pulley 60) and the output side (that is, the secondary pulley 62), a speed ratio of the CVT 14 is changed. The speed ratio, here, indicates a ratio of the rotation speed (that is, revolutions per minute) of the CVT output shaft 66 against the rotation speed (that is, revolutions per minute) of the CVT input shaft 54. Since the positions of the movable sheaves 70 and 74 can be continuously set at any position, the speed ratio of the CVT 14 can be continuously determined in a predetermined range.

The fluid pressure control circuit 40 supplies the pressure fluid from the oil pump 26 to suitable portions in accordance with the driving condition of the vehicle. The driving condition of the vehicle is detected by a speed sensor 76, a NE sensor 78, a shift sensor 80, a pedal sensor 82, an input revolution sensor 84, and the like. The speed sensor 76 detects a vehicle speed SPD. The NE sensor 78 detects a rotation speed of the engine 2. The shift sensor 80 detects a selected shift position of a shift lever. The pedal sensor 82 detects an operated amount of an accelerator pedal or an accelerator angle PA. Here, a throttle angle may be used instead of the accelerator angle PA. The input revolution sensor 84 detects a rotation speed of the input shaft 54 of the primary pulley 60 (that is, CVT input shaft 54). Incidentally, a return circuit of the pressure fluid is not shown in Fig. 2.

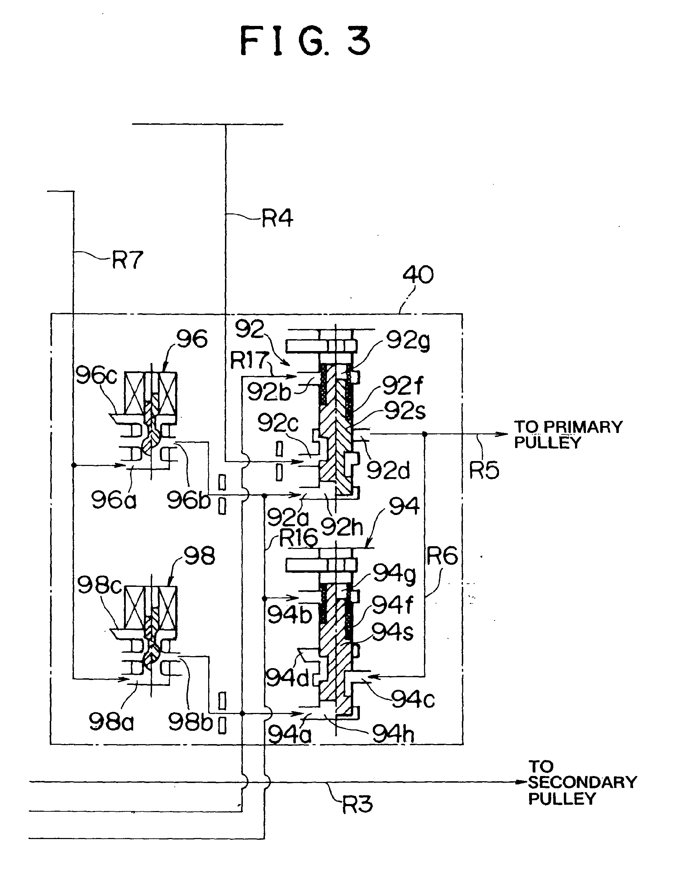

Next, the structure of the fluid pressure control circuit 40 will be explained according to Fig. 3. An up-shift flow control valve 92 comprises four ports (92a, 92b, 92c and 92d), a spool 92s, a spring 92f, a spring chamber 92g, and a control pressure chamber 92h. The spool 92s moves up and down in Fig. 3. The spring 92f pushes the spool 92s downward in the figure. The spring 92f is disposed in the spring chamber 92g. Control pressure is introduced into the control pressure chamber 92h. An up-shift electromagnetic valve 96 has three ports, that is, 96a, 96b, and 96c. When the up-shift electromagnetic valve 96 is on (shown in the right side of the valve 96 in Fig. 3), the ports 96a and 96b are connected to together. Furthermore, the up-shift electromagnetic valve 96 repeats to switch on and off at a constant cycle by a control signal from the control device 5, when the up-shift electromagnetic valve 96 is on. Here, a pulse width of the control signal is controlled. By controlling a duty ratio of the control signal, the up-shift electromagnetic valve 96 controls the constant fluid pressure regulated by a regulator valve to a predetermined pressure between the atmospheric pressure and the constant pressure. This controlled pressure is set as the above-mentioned control pressure, that is an up-shift signal. The control pressure is supplied to the control pressure chamber 92h from the port 92a of the up-shift flow control valve 92.

When the control pressure from the up-shift electromagnetic valve 96 is introduced to the control pressure chamber 92h, the control pressure pushes the spool 92s upward against the spring 92f in the spring chamber 92g. Subsequently, line pressure introduced from the port 92c by way of a fluid passage R4 is supplied to the primary pulley 60, from the port 92d via a fluid passage R5. In the above-mentioned way, a predetermined pressure is applied to the movable sheave 70.

When the up-shift electromagnetic valve 96 is off (shown in the left side of the valve 96 in Fig. 3), the port 96b is connected to the port 96c, and the pressure fluid in the control pressure chamber 92h drains off from the port 96c. Consequently, the fluid pressure of the control pressure chamber 92h is decreased to the atmospheric pressure. The spool 92s of the up-shift flow control valve 92 is, then, moved downward by the spring force of the spring 92f. Finally, the port 92d is closed.

A down-shift flow control valve 94 has four ports (94a, 94b, 94c and 94d), a spool 94s, a spring 94f, a spring chamber 94g, and a control pressure chamber 94h. The spool 94s moves up and down in Fig. 3. The spring 94f pushes the spool 94s downward in the figure. The spring 94f is disposed in the spring chamber 94g. Control pressure is introduced into the control pressure chamber 94h. A down-shift electromagnetic valve 98 has three ports, that is, 98a, 98b, and 98c. When the down-shift electromagnetic valve 98 is on (shown in the right side of the valve 98 in Fig. 3), the ports 98a and 98b are connected to together. Furthermore, the down-shift electromagnetic valve 98 repeats to switch on and off at a constant cycle by a control signal from the control device 5, when the down-shift electromagnetic valve 98 is on. Here, a pulse width of the control signal is controlled. By controlling a duty ratio of the control signal, the down-shift electromagnetic valve 98 controls the constant fluid pressure regulated by a regulator valve to a predetermined pressure between the atmospheric pressure and the constant pressure. This controlled pressure is set as the above-mentioned control pressure, that is a down-shift signal. The control pressure is supplied to the control pressure chamber 94h from the port 94a of the down-shift flow control valve 94.

When the control pressure from the down-shift electromagnetic valve 98 is introduced to the control pressure chamber 94h, the control pressure pushes the spool 94s upward against the spring 94f in the spring chamber 94g. Subsequently, the line pressure introduced from the port 94c by way of a fluid passage R6 is drained from the port 94d. Consequently, a predetermined amount of the fluid is drained from the movable sheave 70 of the primary pulley 60 by way of the fluid passage R6.

When the down-shift electromagnetic valve 98 is off (shown in the left side of the valve 98 in the Fig. 3), the port 98b is connected to the port 98c, and the pressure fluid in the control pressure chamber 94h drains off from the port 98c. Consequently, the fluid pressure of the control pressure chamber 94h is reduced to the atmospheric pressure. The spool 94s of the down-shift flow control valve 94 is, then, moved downward by the spring force of the spring 94f. Finally, the port 94d is closed.

In the above-mentioned fluid pressure control circuit 40, when the up-shift signal is sent from the control device 5, the up-shift electromagnetic valve 96 is turn on at a predetermined duty ratio. The control pressure in accordance with this duty ratio is introduced into the control pressure chamber 92h from the port 92a of the up-shift flow control valve 92. As the result, the spool 92s is pushed upward against the spring 92f in the figure, the ports 92c and 92d are connected to together, and the pressure fluid is supplied to the movable sheave 70 of the primary pulley 60. In this case, "off" is ordered to the down-shift electromagnetic valve 98. Accordingly, the port 94d of the down-shift flow control valve 94 is closed, and the fluid pressure to the primary pulley 60 is maintained. Then, the aforementioned radius of the primary pulley 60 becomes longer. On the contrary, the radius of the secondary pulley 62 becomes shorter in accordance with the increased degree of the radius of the primary pulley 60. The CVT 14 is up-shifted by the aforementioned actions.

On the other hand, when the down-shift signal is sent from the control device 5, the down-shift electromagnetic valve 98 is turn on at a predetermined duty ratio. The control pressure is introduced into the control pressure chamber 94h from the port 94a of the down-shift flow control valve 94. As the result, the spool 94s is pushed upward against the spring 94f in the figure, the ports 94c and 94d are connected together, and the pressure fluid is drained from the port 94d via the fluid passage R6. The fluid pressure of the movable sheave 70 of the primary pulley 60 is, then, decreased. In this case, "off" is ordered to the up-shift electromagnetic valve 96. Accordingly, the port 92d of the up-shift flow control valve 92 is closed, and the fluid pressure to the primary pulley 60 decreases. The radius of the primary pulley 60, then, becomes shorter. On the contrary, the radius of the secondary pulley 62 becomes longer in accordance with the decreased degree of the radius of the primary pulley 60. The CVT 14 is down-shifted by the above-mentioned actions.

The control pressure from the down-shift electromagnetic valve 98 is applied to the spring chamber 92g by way of a fluid passage R17 and the port 92b. When the down-shift electromagnetic valve 98 is turn "on," the port 92d of the up-shift flow control valve 92 is closed. Consequently, the up-shift of the CVT 14 is prohibited by turning the down-shift electromagnetic valve 98 "on," even when the up-shift electromagnetic valve 96 gets out of order and is kept "on."

The control pressure from the up-shift electromagnetic valve 96 is applied to the spring chamber 94g by way of a fluid passage R16 and the port 94b. When the up-shift electromagnetic valve 96 is turn "on," the port 94d of the down-shift flow control valve 94 is closed. Consequently, the down-shift of the CVT is prohibited by turning the up-shift electromagnetic valve 96 "on," even when the down-shift electromagnetic valve 98 gets out of order and is kept "on."

Next, actions in high rotation speed that are controlled by the control device 5 will be explained. It may happen that a suitable speed ratio is not selected in the CVT 14 due to operating characteristics in a device or a plurality of devices installed in the vehicle. The devices which are affected by the rotation speed comprise: a speed sensor 76, a NE sensor 78, a shift sensor 80, a pedal sensor 82, an input revolution sensor 84, an accelerator pedal, a speed shifter, a throttle valve, a transmission 3 and components thereof, an engine 2, a power source, a power train, fuel injectors, a CVT 14, a controller 5, a hydraulic pressure control circuit 40 and devices that sense the operating parameters of the power train. In this case, the input rotation speed of the CVT 14 may be equal to or greater than a predetermined rotation speed and the engine 2 may overrun. It is necessary to avoid this problem.

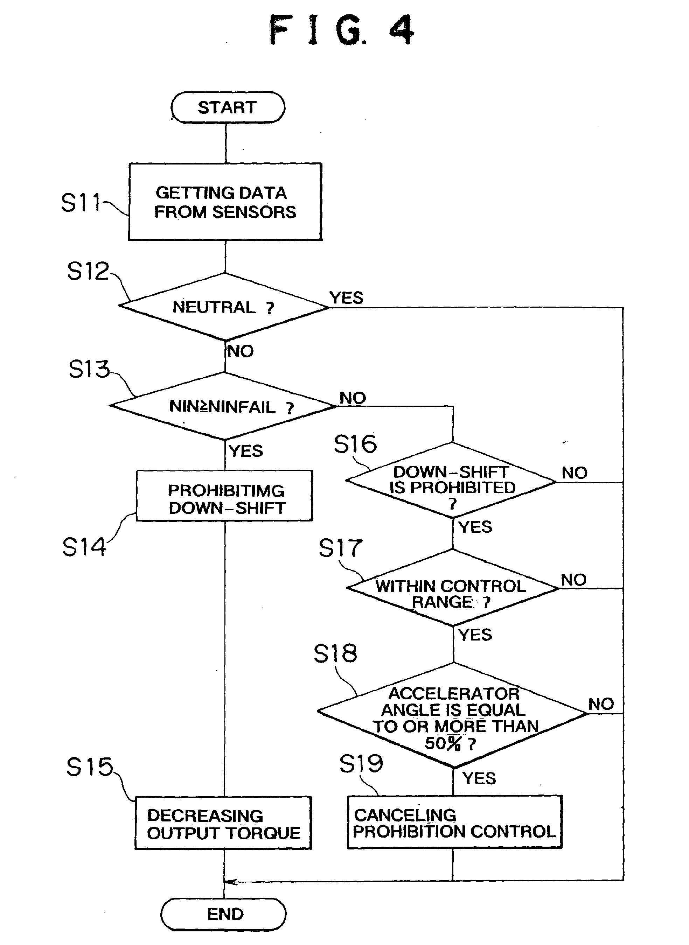

The countermeasures will be explained with reference to Fig. 4. First, in step 11 (hereinafter, referred to simply as S11, and other steps will be described in the same way) the control device 5 reads the vehicle speed SPD from the speed sensor 76, the accelerator angle PA from the pedal sensor 82, the input rotation speed NIN from the input revolution sensor 84, and the shift position from the shift sensor 80. Next, in S12 (that is, query step) whether or not the CVT 14 is neutral is determined. When it is "yes," the routine proceeds to "END," because the CVT 14 does not transmit power and the present control is not necessary.

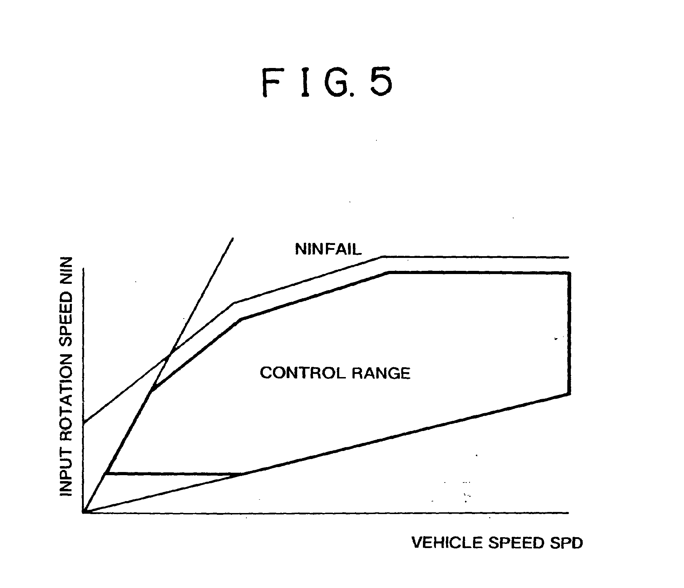

When it is determined that the CVT 14 is not neutral, the routine proceeds to S13. It is determined in S13 whether or not the present input rotation speed NIN is equal to or over a predetermined input rotation speed (or called upper limit input rotation speed) NINFAIL. Here, the predetermined input rotation speed NINFAIL is set as shown in Fig. 5.

Target input rotation speed NINT is determined in the CVT 14 based on the detected vehicle speed SPD and the accelerator angle PA. The speed ratio of the CVT 14 is controlled according to a difference between the detected input rotation speed NIN and the target input rotation speed NINT, and the input rotation speed NIN is controlled to coincide with the target input rotation speed NINT. The target input rotation speed NINT is restricted within a control range shown in Fig. 5. The input rotation speed NIN is controlled so that the input rotation speed NIN is in the aforementioned control range. Here, the horizontal axis shows the vehicle speed SPD, and the vertical axis indicates the input rotation speed NIN.

The upper limit input rotation speed (that is, the predetermined input rotation speed) NINFAIL is set a little higher than the control range in Fig. 5. This indicates that the input rotation speed NIN could not reach such high speed as the upper limit input rotation speed NINFAIL when the control is executed normally.

When "yes" is determined in S13, the input rotation speed NIN should be decreased. The down-shift is prohibited in S14, because the input rotation speed NIN increases if the down-shift is done. This execution results in that the input rotation speed NIN is prevented from further increasing caused by changing the speed ratio of the CVT 14. By the way, if the down-shift is prohibited, the input rotation speed NIN at this time is considered to be greater than the target input rotation speed NINT within the control range. The CVT 14 should be up-shifted, and subsequently the input rotation speed NIN should be decreased.

Next, the routine transitions to S15, and the output torque of the engine 2 is reduced. The CVT input shaft 54 is connected to the engine 2 via the forward-reverse change mechanism 12 and the torque converter 10. Accordingly, by cutting fuel to the engine 2 by fully closing the throttle angle or other methods, the engine 2 functions as a brake. The input rotation speed NIN can be, thus, decreased. Incidentally, it is not always necessary to cut the fuel completely, and a control for decreasing the output torque of the engine 2 by stopping combustion in one or more cylinders in the engine 2 or by other methods is also available.

After the execution for reducing the input rotation speed NIN is done in S14 and S15, the routine ends.

When it is "no" in S13, whether or not the down-shift is kept prohibited is determined in S16. When "no" is determined, the control is under the normal condition. The routine ends, because it is not necessary to cancel the prohibition. On the other hand, when the control is under the prohibition of the down-shift, the routine proceeds to S17. In S17, whether or not the input rotation speed NIN is within the control range is determined. If the control is normal as mentioned above, the CVT should be up-shifted because the present input rotation speed NIN is excessively high, and the input rotation speed should be decreased. Whether or not the control returns back to the normal condition can be determined by the above-mentioned input rotation speed NIN. When the input rotation speed NIN is not within the control range, the prohibition of the down-shift should be maintained, and the routine ends.

When the input rotation speed NIN is within the control range in S17, the routine proceeds to S18, and whether or not the accelerator angle PA is equal to or greater than 50 % is determined. When "no" is determined in S18, the routine goes to "end." On the other hand, when "yes" is determined in S18, the prohibition of the down-shift is canceled in S19, because the input rotation speed NIN not only returns within the control range but it is also surely permissible to increase the input rotation speed NIN by confirming the driver's intention. The decrease of the output torque in S15 is canceled by the fact that the accelerator pedal is depressed, because the driver intends that the engine power should increase and the control should comply with the driver's intention.

In the above-mentioned embodiment, when the input rotation speed NIN is equal to or greater than the predetermined abnormal value, the down-shift is prohibited. Accordingly, by reducing the speed ratio of the CVT 14, the input rotation speed NIN can be decreased. Furthermore, the input rotation speed NIN is decreased more effectively by reducing the output torque of the engine 2.

By canceling the prohibition of the down-shift when the input rotation speed NIN returns within the control range, the control can be returned to the normal control. Especially, the prohibition of the down-shift can be canceled responding to the driving condition by confirming that the driver depresses the accelerator pedal more than a predetermined level and intends to accelerate the vehicle.

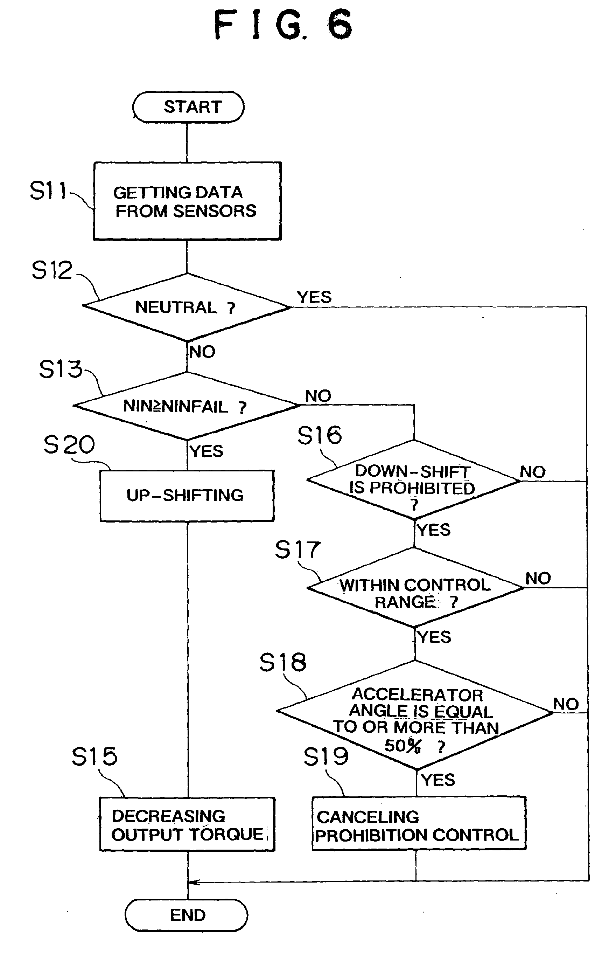

Next, a second embodiment which is partially modified is shown in Fig. 6. In the routine of Fig. 6, the prohibition of the down-shift in S14 shown in Fig. 4 is replaced by an up-shift in S20 in Fig. 6. As mentioned above, the up-shift is executed in order to return the control to be under the normal condition, when the input rotation speed NIN is very high, even when the down-shift is prohibited. In this second embodiment, the up-shift is executed as quickly as possible. That is, the maximum amount of the fluid is introduced from the fluid control valves to the movable sheave 70 of the primary pulley 60 in Fig. 2. Consequently, the up-shift is performed at the maximum speed, and the input rotation speed NIN can be instantly and smoothly decreased. By the way, the up-shift may be executed at a speed different from the maximum, and such a speed of the up-shift may be properly selected.

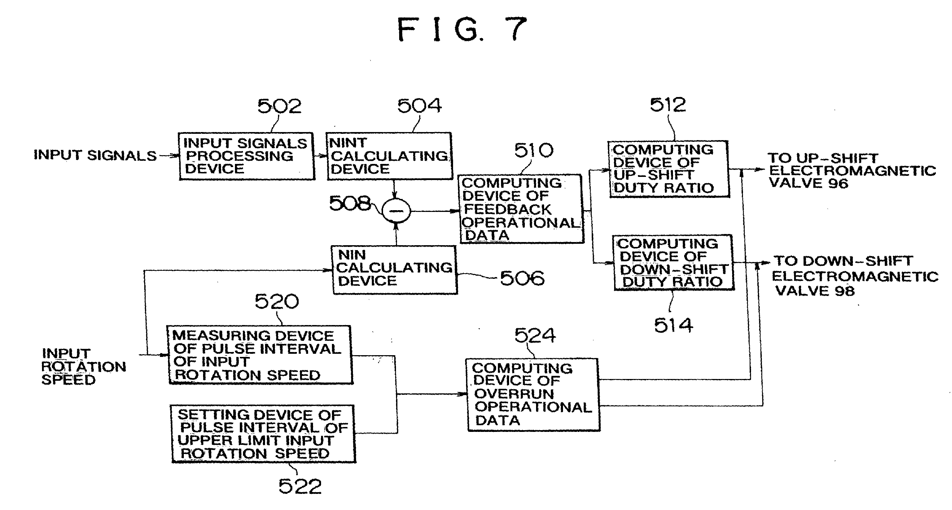

Next, the control device 5 will be explained according to Fig. 7. Each input signal from the sensors shown in Fig. 2 enters an input signal processing device 502 in the control device 5. The input signal processing device 502 repeatedly reads these input signals at a predetermined cycle time and sends the input signals to a NINT calculating device 504. The NINT calculating device 504 calculates the target input rotation speed NINT based on data from the sensors. The target input rotation speed NINT is stored in the control device 5 as a datum in a map. Incidentally, it is preferable that the target input rotation speed NINT is changed corresponding to a temperature of the fluid.

The input revolution sensor 84 is attached on the CVT input shaft 54. The rotation speed detected by the sensor 84 is sent to a difference computing device 508 via a NIN calculating device 506. This difference computing device 508 calculates a difference between the target input rotation speed NINT from the NINT calculating device 504 and the actual input rotation speed NIN. The calculated difference is inputted into a computing device of feedback operational data 510. The computing device 510 computes feed back operational data for actually driving the primary pulley 60. Specifically, the computing device 510 calculates a control quantity QSC for controlling an opening degree of the up-shift flow control valve 92 or the down-shift flow control valve 94. When the up-shift control is performed, the control quantity QSC is sent to a computing device of up-shift duty ratio 512. The computing device 512 calculates a duty ratio for the case where the up-shift electromagnetic valve 96 is "on." When the down-shift is performed, the control quantity QSC is sent to a computing device of down-shift duty ratio 514, and the computing device 514 calculates a duty ratio for the case where the down-shift electromagnetic valve 98 is "on."

Output control pressure from the up-shift electromagnetic valve 96 or the down-shift electromagnetic valve 98 is controlled in accordance with the duty ratio from the computing device of up-shift duty ratio 512 or the computing device of down-shift duty ratio 514. Subsequently, the opening degree of the up-shift flow control valve 92 or the down-shift flow control valve 94 is controlled by the above-mentioned output control pressure. The position of the movable sheave 70 of the primary pulley 60 is thus controlled, and the speed ratio of the CVT 14 is determined.

A measuring device of pulse interval of input rotation speed 520 receives pulses responding to the input rotation speed NIN from the input revolution sensor 84. The measuring device 520 measures the interval of pulses responding to the input rotation speed NIN. On the other hand, on the basis of a map stored in advance, a setting device of pulse interval of the upper limit input rotation speed (NINFAIL) 522 sets the interval of pulses corresponding to the upper limit input rotation speed NINFAIL which responds to the current vehicle speed. The interval of pulses of the actual input rotation speed NIN from the measuring device 520 and the interval of pulses of the upper limit input rotation speed NINFAIL from the setting device 522 are inputted to a computing device of overrun operational data 524. The computing device of overrun operational data 524 compares both intervals of pulses and determines whether or not the interval of pulses of the present input rotation speed NIN is less than the interval of the upper limit input rotation speed NINFAIL. Whether or not the down-shift is prohibited depends on the above-mentioned determination.

Although an explanation concerning the secondary pulley 62 is omitted, a fluid pressure control for controlling the secondary pulley 62 is substantially the same as the fluid pressure control for controlling the primary pulley 60. One difference between the control for the primary pulley 60 and the control for the secondary pulley 62 is that the movable sheave 74 moves in the opposite direction of the movable sheave 70. The aforementioned fluid is usual oil and a pressure control system using the oil is adopted to the fluid pressure control system for this embodiment.

As mentioned above, when the input rotation speed of the automatic transmission is equal to or greater than the predetermined rotation speed, the down-shift is prohibited. By this operation, the input rotation speed can be prevented from further increasing. Consequently, the engine overrun or the like can be effectively avoided. Especially, when the input rotation speed is equal to or greater than the predetermined value because of operating characteristics of a device or a plurality of devices installed in the vehicle, the control system can be returned to the normal condition by the above-mentioned operation.

The input rotation speed can also be quickly decreased by up-shifting in place of the prohibition of the down-shift.

Furthermore, the input rotation speed can be decreased by restricting the output torque of the power source.

As explained, the automatic transmission is the CVT in which the speed ratio can be continuously changed. Even though the automatic transmission is an ordinary automatic transmission which comprises a torque converter and a planetary gear, this invention is also applicable to the ordinary automatic transmission. Since the ordinary automatic transmission has usually a one-way clutch, the ordinary automatic transmission is under neutral condition when an accelerator pedal is released. On the contrary, the CVT does not have the one-way clutch. Accordingly, when the accelerator pedal is released, the engine is directly connected to the input shaft of the transmission, and engine braking occurs. Consequently, the overrun of the engine, or the strong engine braking, occurs easily. If the invention is applied to the CVT, the above-mentioned overrun can be effectively prevented.

In the illustrated embodiment, the controller 5 is implemented as a programmed general purpose computer. It will be appreciated by those skilled in the art that the controller can be implemented using a single special purpose integrated circuit (e.g., ASIC) having a main or central processor section for overall, system-level control, and separate sections dedicated to performing various different specific computations, functions and other processes under control of the central processor section. The controller can be a plurality of separate dedicated or programmable integrated or other electronic circuits or devices (e.g., hardwired electronic or logic circuits such as discrete element circuits, or programmable logic devices such as PLDs, PLAs, PALs or the like). The controller can be implemented using a suitably programmed general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controller. A distributed processing architecture can be used for maximum data/signal processing capability and speed.

While the invention has been described with reference to preferred embodiments thereof, it is to be understood that the invention is not limited to the preferred embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

A method and apparatus control an automatic transmission (3). A controller prohibits (S14) a down-shift of the automatic transmission (3) when the input rotation speed of the automatic transmission (3) is determined to be equal to or greater than a predetermined value due to operating characteristics of a device or a plurality of devices installed in a vehicle equipped with the automatic transmission (3) and an engine (2). Since the down-shift of the automatic transmission (3) is prohibited (S14), when the input rotation speed is determined to be equal to or greater than the predetermined value, the input rotation speed of the automatic transmission (3) is prevented from being further increased. Consequently, overrun of the engine (2) is effectively avoided.

## Claims

1. A control system for an automatic transmission (3) installed in a vehicle, the automatic transmission (3) being connected to a power source (2), a speed ratio of the automatic transmission (3) being controlled in response to an accelerator angle and a vehicle speed, the control system comprising:
a first detector (84) that detects an input rotation speed of the automatic transmission (3); and
a controller (5) that:
determines (S13) whether the detected input rotation speed is equal to or greater than a first predetermined value due to at least one device installed in the vehicle; and
executes a high revolution control that control that prohibits (S14) a down-shift of the automatic transmission (3) when the detected input rotation speed is equal to or greater than the first predetermined value.

2. A control system for an automatic transmission (3) installed in a vehicle, the automatic transmission (3) being connected to a power source (2), a speed ratio of the automatic transmission (3) being controlled in response to an accelerator angle and a vehicle speed, the control system comprising:
a first detector (84) that detects an input rotation speed of the automatic transmission (3); and
a controller (5) that:
determines (S13) whether the detected input rotation speed is equal to or greater than a first predetermined value; and
executes a high revolution control that control that executes (S20) an up-shift of the automatic transmission (3) when the detected input rotation speed is equal to or greater than the first predetermined value.

3. The control system as set forth in claim 1, **characterized in that** the controller (5) prohibits (S14) the down-shift of the automatic transmission (3) and decreases (S15) torque output from the power source (2) when the detected input rotation speed is equal to or greater than the first predetermined value.

4. The control system as set forth in claim 2, **characterized in that** the controller (5) up-shifts (S20) the automatic transmission (3) and decreases (S15) torque output from the power source (2) when the detected input rotation speed is equal to or greater than the first predetermined value.

5. The control system as set forth in any one of claims 1 to 4, **characterized in that** the controller stops (S19) the high revolution control when the detected input rotation speed is less than a second predetermined value.

6. The control system as set forth in any one of claims 3 through 5, **characterized in that** the control sytrem further comprises a second detector (76, 78, 80, 82, 84) that detects (S18) the accelerator angle, and **characterized in that** the controller determines (S18) whether the detected accelerator angle is equal to or greater than a predetermined angle, and the controller stops (S19) the high revolution control when the detected input rotation speed is less than a second predetermined value and the detected accelerator angle is equal to or higher than the predetermined angle.

7. The control system as set forth in any one of claims 1, 2 or 6, **characterized in that** the second detector (76, 78, 80, 82, 84) is at least one of : a speed sensor (76), a NE sensor (78), a shift sensor (80), a pedal sensor (82) and an input revolution sensor (84).

8. The control system as set forth in any one of claims 1 through 4, **characterized in that** the automatic transmission (3) is a continuously variable transmission (14) in which the speed ratio can be continuously changed.

9. A control method for an automatic transmission (3) installed in a vehicle, the automatic transmission (3) being connected to a power source (2), a speed ratio of the automatic transmission (3) being controlled in response to an accelerator angle and a vehicle speed, the control method comprising:
determining (S13) whether an input rotation speed of the automatic transmission (3) is equal to or greater than a first predetermined value due to at least one device installed in the vehicle; and
executing a high revolution control that prohibits (S14) a down-shift of the automatic transmission (3) when the input rotation speed is determined (S13) to be equal to or greater than the first predetermined value.

10. A control method for an automatic transmission (3) installed in a vehicle, the automatic transmission (3) being connected to a power source (2), a speed ratio of the automatic transmission (3) being controlled in response to an accelerator angle and a vehicle speed, the control method comprising:
determining (S13) whether an input rotation speed of the automatic transmission (3) is equal to or greater than a first predetermined value; and
executing a high revolution control that executes (S20) an up-shift of the automatic transmission (3) when the input rotation speed is determined (S17) to be equal to or greater than the first predetermined value.

11. The control method as set forth in claim 9 or 10, **characterized in that** the high revolutions control is stopped (S19) when the input rotation speed is determined (S17) to be less than a second predetermined value.

12. The control method as set forth in claim 11, **characterized in that** the high revolution control is stopped (S19) when the input rotation speed is determined (S17) to be less than a second predetermined value and an accelerator angle is determined (S18) to be equal to or higher than a predetermined angle.
